# EUROPÄISCHE PATENTSCHRIFT

(11) **EP 2 346 583 B1**
(45) Veröffentlichungstag und Bekanntmachung des Hinweises auf die Patenterteilung: **04.06.2014**
(21) Anmeldenummer: 09777428.5
(22) Anmeldetag: 24.07.2009
(51) Int. Cl.: A63C 17/01, A63C 17/26

(54) **ADAPTER FÜR ROLLBRETTER**
ADAPTER FOR SKATEBOARDS
ADAPTATEUR POUR PLANCHES À ROULETTES

(30) Priorität: 08.08.2008 DE 102008037124
(43) Veröffentlichungstag der Anmeldung: 27.07.2011
(73) Patentinhaber: Asphaltboarding GBR, 80803 München (DE); Christ, Olaf, 10999 Berlin (DE)
(72) Erfinder: CHRIST, Olaf, 10999 Berlin (DE)
(74) Vertreter: Sticht, Andreas
(86) Internationale Anmeldenummer: PCT/EP2009/005391
(87) Internationale Veröffentlichungsnummer: WO 2010/015338

(56) Entgegenhaltungen:
- DE-U1- 20 118 032
- DE-U1-202004 007 065
- DE-U1-202004 010 126
- US-A- 4 149 735
- US-A1- 2003 160 411
- US-A1- 2003 201 620

## Beschreibung

Die vorliegende Erfindung betrifft Adapter für Rollbretter sowie Rollbrettsysteme mit entsprechenden Adaptern.

Heutzutage sind verschiedene Rollbretter zur Ausübung verschiedener Rollbrettsportarten handelsüblich erhältlich. Am bekanntesten sind die als Skateboards bezeichneten Rollbretter, andere Arten von Rollbrettern umfassen Longboards, Mountainboards, Flowboards, Freeboards, Downhillboards, welche Bremsen aufweisen, Streetluger, Kickboards (im Wesentlichen Tretroller), T-Boards, Roadboards oder Windsurfboards, wobei letztere ein Segel aufweisen. Diese verschiedenen Rollbretter unterscheiden sich beispielsweise in der Länge oder Dicke der verwendeten Achsen oder dem Durchmesser der verwendeten Rollen. Manche Arten von Rollbrettern weisen noch zusätzliche besondere Merkmale auf, beispielsweise das bereits erwähnte Segel bei Windsurfboards, eine Bremse zum Bremsen zumindest einer Achse bei Downhillboards oder einem Lenker oder einer Haltestange bei Kickboards.

Im Winter werden zudem so genannte Snowboards verwendet, welche keine Rollen aufweisen.

Im Folgenden werden einige der oben erwähnten Rollbrettarten näher erläutert und definiert.

Ein Longboard ist ein spezielles Skateboard, welches länger als übliche Skateboards (i. d. R. zwischen 90 und 150 cm) ist und über einen verlängerten Achsabstand verfügt. In der Regel sind an einem Longboard auch größere Räder aus meist weicherem Material angebracht als bei einem herkömmlichen Skateboard. Weiche und größere Räder (die den Rollwiderstand durch effektivere Absorption von Unebenheiten verringern) sowie der verlängerte Achsabstand ermöglichen durch eine verbesserte Fahrstabilität höhere Geschwindigkeiten als mit einem gängigen Skateboard.

Ein Mountainboard oder auch All-Terrain-Board (deutsch "Allgeländebrett") ist optisch und technisch eine Mischung aus Skateboard und Snowboard zum Rollbrettfahren im Gelände. Ein Flowboard ist eine Form des Skateboards, welche die Eigenschaften eines Snowboards nachzuahmen versucht. Dabei geht es insbesondere um das Carven. Das Flowboard besteht aus einem skateboardähnlichen Brett (auch als "Deck" bezeichnet), an dem vorn und hinten metallene Bögen mit je etwa sieben Rollen befestigt sind.

Ein Freebord ist ein skateboardähnliches Brett, welches das Fahrverhalten eines Snowboards auf Asphalt simuliert. Zusätzlich zu dem reinen Carve-Verhalten eines Skateboards oder Longboards, ermöglicht das Freebord seitliche Rutschbewegungen, das Gleiten oder "Sliden" sowie das abrupte Abbremsen durch das Versetzen des Freebords in eine horizontale Lage zum Hang.

Ein T-Board und ein Roadsurf Board sind Formen des Skateboards mit 2 Rollen, welche die Eigenschaften eines Snowboards nachzuahmen versuchen. Sie unterscheiden sich zum traditionellen Skateboard in ähnlicher Weise, in der sich Rollschuh zu Inlineskates unterscheiden. Das Fahren auf nur zwei Rollen simuliert das Fahren auf der Kante beim Snowboarden. Das T-Board und das Roadsurf Board erlauben dabei einen Neigungswinkel von 60 Grad ähnlich wie der eines Snowboards, im Gegensatz zu einem 25 Grad Neigungswinkel beim Skateboard.

Ein Windboard ist eine Skateboard oder Longboard, auf welches ein Windsurfsegel befestigt ist und dient zur Ausübung der Freizeit- und Trainingsmöglichkeiten für Windsurfer.

Der Begriff Straßenrodeln bzw. *street luge (oder Streetluger)* bezeichnet eine gravitationsabhängige Extremsportart, bei der man auf einer Art überdimensionalen, meist selbstgebauten Skateboard liegend, geteerte Straßen herunter fährt. Es handelt sich um eine Art Rodeln, jedoch ohne Schnee.

Zu bemerken ist, dass die obigen Rollbrettarten lediglich als Beispiele zu verstehen sind und die Erfindung nicht auf diese Rollbrettarten begrenzt ist.

Das oben erwähnte Carving (von engl. *to carve -* schnitzen), auch Schnittschwung genannt, ist eine Weiterentwicklung der konventionellen Skitechnik, bei der die Schwünge vollständig auf den Stahlkanten gefahren werden statt durch die Kurve zu driften. Der Snowboardsport machte die Carving-Technik durch das völlig unterschiedliche Fahrgefühl auf der Kante populär.

Um mehrere verschiedene Rollsportarten, für welche verschiedene Arten von Rollbrettern nötig sind, ausüben zu können, ist es daher nötig, entsprechend viele verschiedene Rollbretter zu kaufen, was mit entsprechend hohen Kosten verbunden ist.

Der Erfindung liegt somit die Aufgabe zugrunde, Adapter und ein entsprechendes System bereitzustellen, womit ein kostengünstiges Wechseln zwischen verschiedenen Arten von Rollbrettern möglich ist.

Aus der US 2003/0201620 A1 ist ein Skateboardlicht bekannt, welches ähnlich einem Abstandshalter zwischen ein Brett und ein Fahrgestell angebracht werden kann. Das Skateboardlicht kann mehrere Bohrungen aufweisen, so dass es mit verschiedenen Arten von Fahrgestellen und entsprechenden Brettern verwendbar ist.

Aus der US 4,149,735 ist eine Rollenanordnung zum Anbringen einer Frontrolle an einem Skateboard bekannt, welche ebenfalls zwischen Fahrgestell und Brett befestigt werden kann und hierzu verschiedene Bohrungen aufweist, um mit verschiedenen Arten von Fahrgestellen und Brettern verwendet werden zu können.

Aus der DE 20 2004 007 065 U1 ist eine Befestigungsstruktur für einen Roller bekannt.

Aus der DE 20 2004 010 126 U1 ist eine Vorrichtung gemäß dem Oberbegriff des Anspruchs 1 bekannt, wobei eine Aufnahme zum Anbringen eines bestimmten Typs von Fahrgestell vorgesehen ist.

Diese Aufgabe wird gelöst durch einen Adapter nach Anspruch 1 sowie ein System nach Anspruch 12. Die abhängigen Ansprüche definieren weitere Ausführungsbeispiele der Adapter oder des Systems.

Gemäß einem ersten Aspekt der Erfindung wird dabei ein Adapter für ein Brett bereitgestellt, wobei der Adapter eine Mehrzahl von Aufnahmen zur Aufnahme verschiedener Fahrgestelle umfasst. Mit einem derartigen Adapter können an einem einzigen Brett verschiedene Fahrgestelle, beispielsweise ein Fahrgestell für ein Longboard, ein Fahrgestell für ein Mountainboard oder ein Fahrwerk für eine andere Art von Rollbrett angebracht werden.

Die Aufnahmen können dabei insbesondere Gewindebohrungen und/oder Bohrungen bzw. Löcher zur Aufnahme von Schrauben zur Befestigung verschiedener Fahrgestelle umfassen. Dabei kann bei einem derartigen Ausführungsbeispiel ausgenutzt werden, dass die Befestigungsmöglichkeiten für verschiedene Typen von Fahrgestellen genormt sind, so dass die entsprechenden Aufnahmen zur Aufnahme verschiedener normgerechter Fahrgestelle bereitgestellt werden können.

Ein Ausführungsbeispiel eines erfindungsgemäßen Systems umfasst ein oder mehrere Adapter wie oben definiert.

Zudem kann ein derartiges System einen Kantenschutz für ein Brett und/oder ein Brett, beispielsweise ein Snowboard, enthalten.

Die Erfindung wird nachfolgend anhand von Ausführungsbeispielen näher erläutert. Die Erfindung wird nachfolgend unter Bezugnahme auf die beigefügte Zeichnung anhand von Ausführungsbeispielen näher erläutert. Es zeigen:
- Fig. 1: eine Draufsicht auf ein Brett von der Oberseite, welches mit Adaptern gemäß einem Ausführungsbeispiel der vorliegenden Erfindung ausgerüstet ist,
- Fig. 2: eine Draufsicht auf das Brett von Fig. 1 von der Unterseite,
- Fig. 3: eine Querschnittsansicht des Brettes der Figuren 1 und 2, wobei das Brett in Fig. 3 mit anderen Zusatzkomponenten ausgerüstet ist als in Fig. 1 und Fig. 2, und
- Fig.4: eine Querschnittsansicht eines Adapters, welcher kein anderes Ausführungsbeispiel der Erfindung ist.

Im Folgenden werden Ausführungsbeispiele der vorliegenden Erfindung erläutert. Diese Ausführungsbeispiele sind lediglich als beispielhaft, nicht jedoch als einschränkend anzusehen. Zu bemerken ist, dass die Beschreibung eines Ausführungsbeispiels mit einer Vielzahl von Komponenten nicht dahingehend auszulegen ist, dass alle diese Komponenten zur Ausführung der vorliegenden Erfindung nötig sind. Vielmehr können bei anderen Ausführungsbeispielen weniger Komponenten und/oder alternative Komponenten vorgesehen sein.

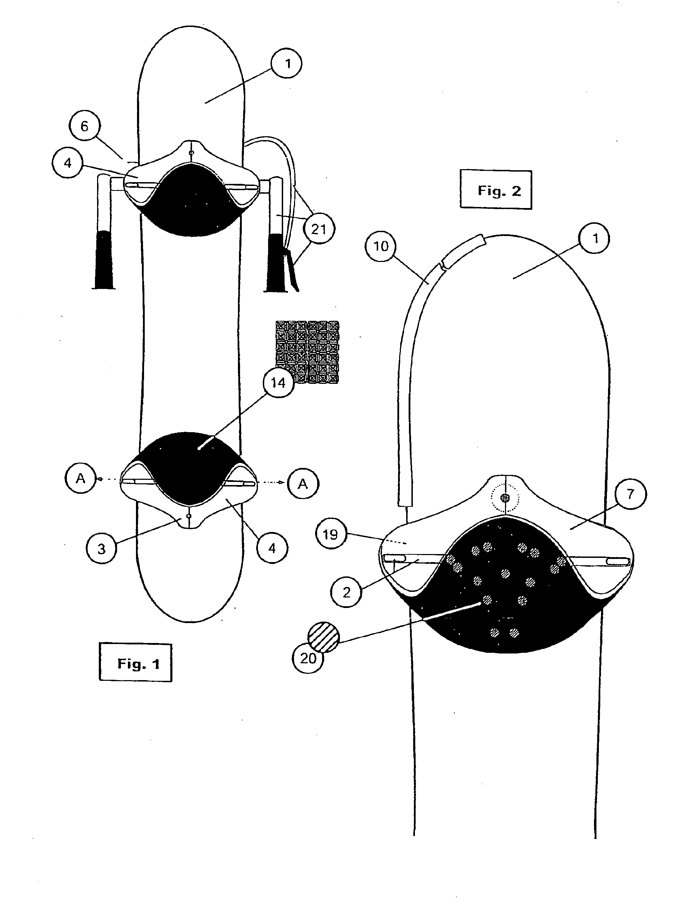

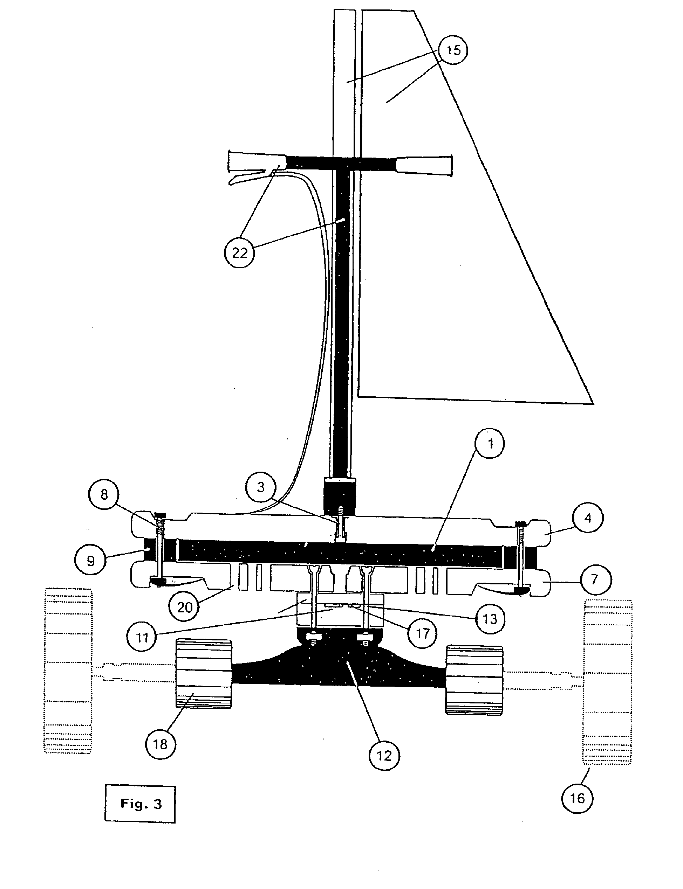

Ein erstes Ausführungsbeispiel der vorliegenden Erfindung wird unter Bezugnahme auf Figuren 1 bis 3 beschrieben. Fig. 1 zeigt dabei eine Draufsicht auf ein mit zwei Ausführungsbeispielen eines erfindungsgemäßen Adapters ausgerüstetes Brett 1 von der Oberseite, Fig. 2 zeigt eine teilweise Draufsicht auf das Brett von Fig. 1 von der Unterseite, und Fig. 3 zeigt eine Seitenansicht. Zur Veranschaulichung verschiedener Einsatzmöglichkeiten des Adapters gemäß dem Ausführungsbeispiel der Figuren 1 bis 3 sind in den Figuren 1 bis 3 teilweise verschiedene Elemente an den Adapter angebaut.

Der Adapter der Figuren 1 bis 3 umfasst eine obere Bindungsplatte 4 und eine untere Bindungsplatte 7, die jeweils an den Längsseiten des verwendeten Brettes 1 einen Überstand 6 aufweisen. Das Brett 1 kann dabei beispielsweise ein Snowboard oder ein als Rollbrett konstruiertes Brett sein. Wie insbesondere in Fig. 3 zu sehen, sind die obere Bindungsplatte 4 und die untere Bindungsplatte 7 im Bereich des Überstandes 6 mit einem Schnellspanner 8 mit exzentrisch gelagertem Klemmhebel verbunden. Bei den Ausführungsbeispielen der Figuren 1 bis 3 weist die untere Bindungsplatte 7 zur Aufnahme eines Spannhebels des Schnellspanners 8 eine dafür vorgesehene Führung 2 auf, und die obere Bindungsplatte 4 weist einen entsprechenden Schlitz bzw. eine entsprechende Vertiefung zur Aufnahme einer Mutter des Schnellspanners 8 auf. Während bei dem Ausführungsbeispiel der Figuren 1 bis 3 die Schnellspanner 8 so angeordnet sind, dass der jeweilige Spannhebel in der Führung 2 der jeweiligen unteren Bindungsplatte 7 aufgenommen wird, ist auch die umgekehrte Anordnung, d.h. die Aufnahme des Spannhebels in der oberen Bindungsplatte 4, oder eine Befestigung ohne Schnellspanner, beispielsweise durch Schrauben und Muttern, möglich. Bei dem Ausführungsbeispiel der Figuren 1 bis 3 sind weiterhin Distanzhülsen 9 auf den Schäften der Schnellspanner 8 vorgesehen, wobei eine Höhe der Distanzhülsen 9 einer Dicke des Brettes 1 entspricht.

Bei dem Ausführungsbeispiel der Figuren 1 bis 3 ist, wie später noch näher erläutert werden wird, an jedem Adapter, insbesondere an der jeweiligen unteren Bindungsplatte 7, ein Fahrgestell anbringbar. Um somit ein Rollbrett mit zwei Fahrgestellen, insbesondere mit zwei Achsen, zu erhalten, können wie in Fig. 1 dargestellt zwei derartige Adapter an dem Brett 1 angebracht werden, wobei die Position des Adapters bei einem Ausführungsbeispiel entsprechend der gewünschten Position des Fahrgestells stufenlos wählbar ist. Insbesondere können bei einem Ausführungsbeispiel, welches Schnellspanner wie die Schnellspanner 8 verwendet, können die Adapter auf einfache Weise entlang des Brettes verschoben werden, um somit verschiedene Fahrgestells- bzw. Achsabstände und -positionen stufenlos einzustellen.

Die Befestigung eines Fahrgestells 12 an der unteren Bindungsplatte 7 gemäß einem Ausführungsbeispiel ist in Fig. 3 dargestellt. Bei diesem Ausführungsbeispiel sind die Fahrgestelle 12 mittels versenkbarer Verbindungsschrauben 13 mit der unteren Bindungsplatte 7 verbunden, wobei ein oder mehrere Distanzhalter 11 (zwei in dem Beispiel der Fig. 3) vorgesehen sind, um einen Abstand des Fahrgestells 12 zu der unteren Bindungsplatte 7 einzustellen. Bei einem Ausführungsbeispiel eines erfindungsgemäßen Systems sind mehrere Distanzhalter 11 verschiedener Stärken vorgesehen, um somit den Abstand des Fahrgestells 12 zu der unteren Bindungsplatte 7 gemäß eines gewünschten Rollbretttyps einstellen zu können.

Bei einem Ausführungsbeispiel weisen ein oder mehrere der Distanzhalter Aussparungen 17 auf, um benötigte Werkzeuge, beispielsweise Schraubenzieher oder Schraubenschlüssel zum Festziehen der Verbindungsschrauben 13, aufnehmen zu können.

Zur Aufnahme der Verbindungsschrauben 3 sind in der unteren Bindungsplatte 7 eine Vielzahl von Löchern 20 vorgesehen. Wie insbesondere in Fig. 2 zu sehen, ist dabei eine Vielzahl von Löchern 20 zur Aufnahme verschiedener Fahrgestelle vorgesehen. Diesbezüglich ist anzumerken, dass ein Schraubmuster oder Schraubabstand für verschiedene Fahrgestellstypen, beispielsweise Fahrgestelle für Skateboards, Longboards, Mountainboards etc., normiert oder anderweitig festgelegt ist, und bei einem Ausführungsbeispiel der Erfindung sind die Schraublöcher 20 entsprechend zweien oder mehreren dieser normierten oder festgelegten Fahrgestellschraubmuster angeordnet. Auf diese Weise können bei einem derartigen Ausführungsbeispiel an ein und dieselbe Bindungsplatte auf einfache Weise verschiedene Typen von Fahrgestellen angebracht werden.

Bei dem Ausführungsbeispiel der Figuren 1 bis 3 weist auch die obere Bindungsplatte 4 Löcher zur Aufnahme von Schrauben und/oder ein anderes Befestigungselement auf. Insbesondere ist so bei dem Ausführungsbeispiel wie in Fig. 3 gezeigt eine Befestigungsmöglichkeit 3 für ein Windsurfsegel 15 oder für eine Tretrollerlenkstange 22 mit Haltegriff und Bremse vorgesehen. Zudem kann an dieser oder einer anderen Befestigungsmöglichkeit bei einem Ausführungsbeispiel ein Sicherheitsband, ein Tragegurt, ein Schloss zur Diebstahlsicherung oder ein Band zum Ziehen des Brettes befestigt werden.

Bei einem Ausführungsbeispiel kann des Weiteren auf der oberen Bindungsplatte 4 ein oder mehrere weitere Löcher oder Befestigungsmöglichkeiten angeordnet sein, beispielsweise zur Befestigung einer Fußschlaufe zur verbesserten Verbindung zwischen einem Fahrer und dem Brett.

Die bereits erwähnte Führung 2 bzw. ein entsprechender Schlitz in der oberen Bindungsplatte 4 kann bei einem Ausführungsbeispiel gleichzeitig als Befestigungsmöglichkeit für Haltegriffe 21 mit Bremssystem, wie sie in Fig. 1 beispielhaft dargestellt sind, dienen. Auf diese Weise kann das Brett auf einfache Weise als so genannter Streetluger oder Rollschlitten bzw. Rollbob genutzt werden, wobei der Fahrer in diesem Fall mit den in Fahrtrichtung auf dem Brett liegenden Beinen auf der in Fahrtrichtung hinteren oberen Bindungsplatte 4 sitzt und diese als Sitzfläche nutzt. Die Haltegriffe werden dabei zum Festhalten sowie die Bremse zum Regulieren der Geschwindigkeit benutzt.

Eine oder beide der oberen Bindungsplatten 4 können bei dem Ausführungsbeispiel der Figuren 1 bis 3 mit einer Antirutschstruktur 14 versehen sein, welche eine Gefahr des Wegrutschens verringert. Eine derartige Antirutschstruktur 14 kann beispielsweise Rippen umfassen, wobei die Rippen verschiedene Größen und Anordnungen haben können.

An den unteren Bindungsplatten 7 und/oder an den oberen Bindungsplatten 4 können Markierungen 19 vorgesehen sein, um die Ausrichtung der Bindungsplatten zu der Längsachse des Brettes und somit die korrekte Montage der Bindungsplatten zu vereinfachen.

Zudem kann der Schlitz 2 als Führung eines Bremskabels einer Bremse für eine Achse, beispielsweise eines Bowdenzuges, dienen.

Bei einem Ausführungsbeispiel eines erfindungsgemäßen Systems werden verschiedene Fahrgestelle 12 an mehrere untere Bindungsplatten 7 mittels entsprechender Verbindungsschrauben 13 und Distanzstücke 11 befestigt. Auf diese Weise ist eine besonders schnelle Umrüstung eines Brettes möglich, da mittels Schnellspannern wie den Schnellspannern 8 auf schnelle Weise die untere Bindungsplatte 7 mit montiertem Fahrgestell 12 ausgetauscht werden kann.

Bei einem derartigen Brett muss dann nur das Fahrgestell ausgetauscht werden.

Bei einem weiteren Ausführungsbeispiel eines erfindungsgemäßen Systems wird als Brett 1 ein Snowboard verwendet. Auf diese Weise kann ein Snowboard leicht zu einem Rollbrett umgerüstet werden. Bei einem derartigen System kann ein Kantenschutz 10 vorgesehen sein, um die Kanten des Snowboards zu schützen. Grundsätzlich kann ein derartiger Kantenschutz auch bei einem anderen Brett als einem Snowboard eingesetzt werden.

Vorstehend wurde unter Bezugnahme auf Figuren 1 bis 3 Ausführungsbeispiele eines erfindungsgemäßen Adapters zur Befestigung verschiedener Fahrgestelle, einer Lenkstange, Haltegriffen und/oder eines Windsurfsegels diskutiert. Zu bemerken ist, dass Ausführungsbeispiele der vorliegenden Erfindung nicht notwendigerweise alle oben diskutierten Befestigungsmöglichkeiten aufweisen müssen, sondern manche Ausführungsbeispiel auch nur einen Teil dieser Möglichkeiten aufweisen.

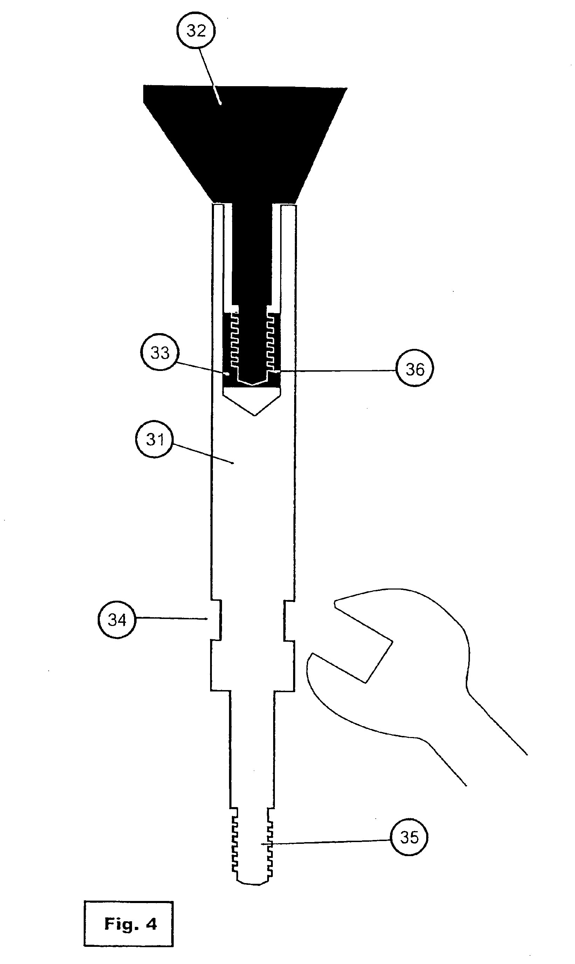

Im Folgenden wird unter Bezugnahme auf Fig. 4 ein weiterer Adapter beschrieben, welcher kein Ausführungsbeispiel darstellt. Der Adapter gemäß Fig. 4 dient dabei insbesondere zur Verlängerung einer Rollbrettachse. Der Adapter der Fig. 4 umfasst einen langgestreckten Körper 31, welcher an einem Ende ein Außengewinde 35 und an einem gegenüberliegenden anderen Ende eine Bohrung mit einem Innengewinde 36 aufweist. In der Bohrung kann zudem ein Gewindestopper 33 angeordnet sein. Zudem weist der langgestreckte Körper 1 eine Griffstelle 34 auf, welche ausgestaltet ist, mit einem Schraubenschlüssel gehalten zu werden. Zur Montage wird der Adapter der Fig. 4 mittels des Innengewindes 36 auf eine Achse 32 eines Rollbrettfahrgestells geschraubt, wobei das entsprechende Außengewinde der Achse 32 sonst zur Aufnahme einer entsprechenden Rolle dient, welche beispielsweise vor der Montage des Adapters entfernt wird. Eine Rolle wird dann auf das Außengewinde 35 geschraubt.

Dabei kann das Gewindemaß des Gewindes 35 dem Gewindemaß des Gewindes 36 entsprechen. In diesem Fall stellt der Adapter einfach eine Verlängerung der Achse dar, und auf das Gewinde 35 kann die gleiche Rolle wie auf die Achse 32 geschraubt werden. Bei einem anderen Fall unterscheidet sich das Gewinde 35 von dem Gewinde 36, und weist beispielsweise einen anderen Gewindedurchmesser auf. In diesem Fall kann auf das Gewinde 35 eine andere Rolle, beispielsweise eine größere Rolle oder eine kleinere Rolle, geschraubt werden als auf die Achse 32. Beispielsweise können die Gewinde 35 und 36 so genannte G1-Gewinde sein, womit zum Beispiel eine Skateboardachse zu einer stärkeren und längeren Longboardachse mit gleichen Gewinden zur Befestigung der gleichen Rollen wie auf der Skateboardachse umgebaut werden. Bei einem anderen Adapter ist das Gewinde 36 ein so genanntes G1-Gewinde, und das Gewinde 35 ist ein größeres Gewinde, beispielsweise ein G2-Gewinde. Hiermit kann eine Skateboardachse zu einer stärkeren und längeren Mountainboardachse mit größerem Gewinde zur Befestigung von Mountainboardreifen umgebaut werden. Dies ist schematisch auch in Fig. 3 dargestellt, wobei die Skateboardrollen mit dem Bezugszeichen 18 bezeichnet sind und Adapter und auf die Adapter geschraubte größere Mountainboardreifen 16 gestrichelt dargestellt sind.

Bei noch einem anderen Adapter kann das Gewinde 36 ein größeres Gewinde, beispielsweise ein G2-Gewinde, und das Gewinde 35 ein kleineres Gewinde wie beispielsweise ein G1-Gewinde sein. Mit einem derartigen Adapter kann beispielsweise eine Mountainboardachse zu einer Longboardachse mit einem Gewinde zur Befestigung kleinerer Rollen wie der Rollen 18 aus Fig. 3 umgebaut werden..

Wie aus Fig. 3 ersichtlich kann der Adapter der Fig. 4 mit dem unter Bezugnahme auf Figuren 1 bis 3 erläuterten Adapter kombiniert werden. Wie oben detailliert beschrieben sind weiterhin verschiedene Variationen und Abwandlungen der dargestellten Ausführungsbeispiele möglich, so dass die Erfindung nicht auf die dargestellten Ausführungsbeispiele begrenzt ist.

## Patentansprüche

1. Adapter für ein Brett (1), umfassend:
- eine obere Bindungsplatte (4),
- eine untere Bindungsplatte (7),
- mindestens ein Verbindungselement (8) zum Verbinden der oberen mit der unteren Verbindungsplatte derart, dass ein Brett (1) zwischen die obere Bindungsplatte (4) und die untere Bindungsplatte (7) einklemmbar ist,
**gekennzeichnet durch**
mindestens zwei unterschiedliche Aufnahmen (20) zum Anbringen verschiedener Typen von Fahrgestellen (12), wobei die mindestens zwei unterschiedlichen Aufnahmen in der unteren Bindungsplatte (7) vorgesehen sind.

2. Adapter nach Anspruch 1, wobei die mindestens zwei unterschiedlichen Aufnahmen eine Mehrzahl von Löchern (20) zur Aufnahme von Befestigungsschrauben umfassen.

3. Adapter nach Anspruch 1 oder 2, wobei die mindestens zwei unterschiedlichen Aufnahmen zum Anbringen verschiedener genormter Typen von Fahrgestellen ausgestaltet sind.

4. Adapter nach einem der Ansprüche 1 bis 3, wobei die verschiedenen Typen von Fahrgestellen (12) ausgewählt sind aus der Gruppe bestehend aus Skateboardachsen, Skateboardfahrgestellen, Longboardfahrgestellen, Mountainboardfahrgestellen, Flowboardfahrgestellen, Freeboardfahrgestellen, T-Boardfahrgestellen, Roadsurffahrgestellen und bremsbaren Fahrgestellen.

5. Adapter nach einem der Ansprüche 1 bis 4, wobei das Verbindungselement (8) einen Schnellspanner umfasst.

6. Adapter nach einem der Ansprüche 1 bis 5, wobei der Adapter auf einer Oberseite einer Antirutschstruktur aufweist.

7. Adapter nach einem der Ansprüche 1 bis 6, wobei der Adapter auf einer Oberseite ein Befestigungselement zum Befestigen eines Segels und/oder einer Lenkstange aufweist.

8. Adapter nach einem der Ansprüche 6 oder 7, wobei die Oberseite des Adapters die obere Seite der oberen Bindungsplatte (4) ist.

9. Adapter nach einem der Ansprüche 1 bis 8, wobei der Adapter derart ausgestaltet ist, dass eine Position des Adapters an dem Brett (1) verstellbar ist.

10. Adapter nach einem der Ansprüche 1 bis 9, wobei der Adapter eine Markierung (19) zur Ausrichtung des Adapters an dem Brett (1) umfasst.

11. Adapter nach einem der Ansprüche 1 bis 10, wobei der Adapter eine Aufnahme (2) für einen Haltegriff (21) und/oder einen Bowdenzug aufweisen.

12. System, umfassend:
mindestens einen Adapter nach einem der Ansprüche 1 bis 11.

13. System nach Anspruch 12, wobei der mindestens eine Adapter einen ersten Adapter nach einem der Ansprüche 1 bis 11 und einen zweiten Adapter nach einem der Ansprüche 1 bis 11 umfasst.

14. System nach Anspruch 12 oder 13, weiter umfassend mindestens ein Distanzstück (11) zum Einstellen eines Abstandes eines Fahrgestells (12) von einem Adapter des mindestens einen Adapters.

15. System nach einem der Ansprüche 12 bis 14, weiter umfassend ein Brett (1).

## Claims

1. An adapter for a board (1), comprising:
- an upper binding plate (4)
- a lower binding plate (7)
- at least one connecting element (8) for connecting the upper to the lower connecting plate such that a board (1) can be clamped between the upper binding plate (4) and the lower binding plate (7),
**characterized by**
at least two different receptacles (20) for attaching different types of chassis (12), wherein the at least two different receptacles are provided in the lower binding plate (7).

2. The adapter as claimed in claim 1, wherein the at least two different receptacles comprise a plurality of holes (20) for accommodating fastening screws.

3. The adapter as claimed in claim 1 or 2, wherein the at least two different receptacles are configured for the attachment of different standardized types of chassis.

4. The adapter as claimed in one of claims 1 to 3, wherein the different types of chassis (12) are selected from the group consisting of skateboard axles, skateboard chassis, longboard chassis, mountainboard chassis, flowboard chassis, freeboard chassis, T-board chassis, road-surf chassis and chassis that can be braked.

5. The adapter as claimed in one of claims 1 to 4, wherein the connecting element (8) comprises a quick-release clamp.

6. The adapter as claimed in one of claims 1 to 5, wherein a top side of the adapter has a nonslip structure.

7. The adapter as claimed in one of claims 1 to 6, wherein a top side of the adapter has a fastening element for fastening a sail and/or a steering rod.

8. The adapter as claimed in one of claims 6 or 7, wherein the top side of the adapter is the top side of the upper binding plate (4).

9. The adapter as claimed in one of claims 1 to 8, wherein the adapter is configured such that the position of the adapter on the board (1) can be adjusted.

10. The adapter as claimed in one of claims 1 to 9, wherein the adapter comprises a marking (19) for orienting the adapter on the board (1).

11. The adapter as claimed in one of claims 1 to 10, wherein the adapter has a receptacle (2) for a handgrip (21) and/or a Bowden cable.

12. A system comprising:
at least one adapter as claimed in one of claims 1 to 11.

13. The system as claimed in claim 12, wherein the at least one adapter comprises a first adapter as claimed in one of claims 1 to 11 and a second adapter as claimed in one of claims 1 to 11.

14. The system as claimed in claim 12 or 13, further comprising at least one spacer (11) for setting a spacing of a chassis (12) from one adapter of the at least one adapter.

15. The system as claimed in one of claims 12 to 14, further comprising a board (1).

## Revendications

1. Adaptateur pour une planche (1), comprenant:
- une plaque de fixation supérieure (4),
- une plaque de fixation inférieure(7),
- au moins un élément de liaison (8) pour relier la plaque de fixation supérieure avec la plaque de fixation inférieure de telle manière qu'une planche (1) peut être serrée entre la plaque de fixation supérieure (4) et la plaque de fixation inférieure (7),
**caractérisé par**
au moins deux logements différents (20) pour monter deux types différents de châssis (12), les au moins deux logements différents étant prévus dans la plaque de fixation inférieure (7).

2. Adaptateur selon la revendication 1, dans lequel les au moins deux logements différents comprennent une pluralité de trous (20) pour recevoir des vis de fixation.

3. Adaptateur selon la revendication 1 ou 2, dans lequel les au moins deux logements différents sont aménagés pour le montage de différents types normalisés de châssis.

4. Adaptateur selon l'une des revendications 1 à 3, dans lequel les différents types de châssis (12) sont choisis dans le groupe constitué des axes de skateboard, châssis de skateboard, châssis de longboard, châssis de mountainboard, châssis de flowboard, châssis de freeboard, châssis de T-board, châssis de roadsurf et châssis freinables.

5. Adaptateur selon l'une des revendications 1 à 4, dans lequel l'élément de liaison (8) comprend un serrage rapide.

6. Adaptateur selon l'une des revendications 1 à 5, dans lequel l'adaptateur comprend une structure antidérapante sur une face supérieure.

7. Adaptateur selon l'une des revendications 1 à 6, dans lequel l'adaptateur comporte un élément de fixation sur une face supérieure pour la fixation d'une voile et/ou d'un guidon.

8. Adaptateur selon l'une des revendications 6 ou 7, dans lequel la face supérieure de l'adaptateur est la face supérieure de la plaque de fixation supérieure (4).

9. Adaptateur selon l'une des revendications 1 à 8, dans lequel l'adaptateur est aménagé de telle manière qu'une position de l'adaptateur sur la planche (1) est ajustable.

10. Adaptateur selon l'une des revendications 1 à 9, dans lequel l'adaptateur comprend un marquage (19) pour l'orientation de l'adaptateur sur la planche (1).

11. Adaptateur selon l'une des revendications 1 à 10, dans lequel l'adaptateur comporte un logement (2) pour une poignée de maintien (21) et/ou un câble Bowden.

12. Système, comprenant:
au moins un adaptateur selon l'une des revendications 1 à 11.

13. Système selon la revendication 12, dans lequel le au moins un adaptateur comprend un premier adaptateur selon l'une des revendications 1 à 11 et un deuxième adaptateur selon l'une des revendications 1 à 11.

14. Système selon la revendication 12 ou 13, comprenant en outre au moins une entretoise (11) pour régler une distance d'un châssis (12) à un adaptateur du au moins un adaptateur.

15. System selon l'une des revendications 12 à 14, comprenant en outre une planche (1).
